# FASCICULE DE BREVET EUROPEEN

(11) **EP 3 542 039 B1**
(45) Date de publication et mention de la délivrance du brevet: **09.06.2021**
(21) Numéro de dépôt: 17804641.3
(22) Date de dépôt: 17.11.2017
(51) Int. Cl.: F02C 7/272

(54) **DISPOSITIF PYROTECHNIQUE**
PYROTECHNISCHE VORRICHTUNG
PYROTECHNIC DEVICE

(30) Priorité: 18.11.2016 FR 1661176
(43) Date de publication de la demande: 25.09.2019
(73) Titulaire: Safran Helicopter Engines, 64510 Bordes (FR)
(72) Inventeur: DANGUY, François, 77550 Moissy-Cramayel (FR); FABBRI, Laurent Paul Lattanzio, 77550 Moissy-Cramayel (FR); GAUTHIER, Romain Maurice Henri Yannick, 77550 Moissy-Cramayel (FR); SAUCEREAU, Didier Paul, 77550 Moissy-Cramayel (FR)
(74) Mandataire: Cabinet Beau de Loménie
(86) Numéro de dépôt international: PCT/FR2017/053156
(87) Numéro de publication internationale: WO 2018/091848

(56) Documents cités:
- WO-A1-2014/108635
- WO-A1-2014/108649
- WO-A2-01/34516
- WO-A2-2008/043946
- WO-A2-2009/113058
- DE-A1- 19 903 237
- FR-A1- 3 012 848
- US-A- 3 046 741

## Description

### Arrière-plan de l'invention

La présente invention concerne le domaine des dispositifs pyrotechniques.

Des dispositifs pyrotechniques comprenant une charge pyrotechnique principale, un dispositif de mise à feu pour la mise à feu de la charge pyrotechnique principale, et un passage d'évacuation pour l'évacuation de gaz générés par la mise à feu de la charge pyrotechnique principale sont notamment utilisés pour le démarrage de turbomachines telles que des moteurs à turbine ou des turbopompes d'alimentation en ergols de moteurs-fusées. Dans ces applications, les gaz générés par la mise à feu de de la charge pyrotechnique principale sont évacués vers un passage d'admission d'une turbine, afin d'actionner cette turbine pour démarrer la turbomachine.

Ainsi, par exemple, dans les moteurs à turbine tels que les turboréacteurs à simple ou double flux, les turbopropulseurs ou les turbomoteurs utilisés dans l'aéronautique, comprenant un compresseur, une chambre à combustion et une turbine couplée au compresseur afin d'actionner ce dernier, un tel dispositif pyrotechnique connecté par exemple à une turbine de démarrage, permet de démarrer la turbine et le compresseur pour alimenter la chambre de combustion en air à pression avant son allumage. De manière similaire, dans un moteur-fusée avec alimentation par turbopompe, que ce soit par un cycle à flux dérivé, à flux intégré ou à expandeur, un tel dispositif pyrotechnique permet de démarrer la turbopompe d'alimentation en ergols avant allumage.

WO2008/043946 A2 décrit un procédé pyrotechnique de génération de gaz a deux régimes.

Toutefois, un inconvénient de tels dispositifs pyrotechniques est que les gaz générés par la mise à feu de la charge pyrotechnique ont une température très élevée, exigeant en conséquence une conception appropriée des turbines et notamment l'utilisation de matériaux à très haute résistance thermique, ce qui est négatif en termes de coût, mais aussi éventuellement de poids et durée de vie.

### Objet et résumé de l'invention

La présente divulgation vise à remédier à ces inconvénients, en proposant un dispositif pyrotechnique comprenant une charge pyrotechnique principale, un dispositif de mise à feu pour la mise à feu de la charge pyrotechnique principale, et un passage d'évacuation pour l'évacuation de gaz générés par la mise à feu de la charge pyrotechnique principale qui permette de réduire la température desdits gaz et donc les sollicitations thermiques des matériaux en aval.

Dans au moins un mode de réalisation, ce but est atteint grâce au fait que le dispositif pyrotechnique comprend aussi un dispositif d'injection configuré pour injecter un fluide de refroidissement dans ledit passage d'évacuation de gaz.

Grâce à ces dispositions, la température des gaz peut être réduite de manière à protéger les éléments en aval de ce passage d'évacuation de gaz. Par ailleurs, l'expansion du fluide de refroidissement suite à l'absorption d'une partie de la chaleur transportée par les gaz permet d'augmenter sensiblement le débit volumique fourni par le dispositif pyrotechnique, et ainsi le travail pouvant en être extrait en aval par une turbine.

Afin de faciliter son utilisation, ladite charge pyrotechnique principale peut notamment être solide. Toutefois, des charges pyrotechniques alternatives (liquides ou hybrides liquide-solide) peuvent être également envisagées.

Ledit fluide de refroidissement peut notamment être aqueux. Dans ce contexte, on entend par « aqueux » un fluide dont le principal ou même le seul composant (en termes de masse et/ou de volume) est l'eau. L'eau est non seulement une substance facilement disponible, mais offre aussi une enthalpie de vaporisation élevée, permettant de réduire très sensiblement la chaleur des gaz générés par la mise à feu de la charge pyrotechnique principale avec une quantité de fluide de refroidissement relativement réduite. En outre, son passage à l'état gazeux génère un volume supplémentaire très important, permettant d'augmenter le travail pouvant être extrait en aval par une turbine. Toutefois, d'autres fluides de refroidissement, non-aqueux, peuvent aussi être envisagés.

Afin de permettre l'utilisation d'un fluide de refroidissement aqueux même par basses températures ambiantes, celui-ci peut comprendre un antigel, tel que, par exemple, du méthanol, de l'éthylène glycol, du propylène glycol ou du glycérol.

Pour assurer l'injection du fluide de refroidissement dans le passage d'évacuation de gaz, le dispositif d'injection peut notamment comprendre un réservoir pour le fluide de refroidissement, en communication avec le passage d'évacuation, et un dispositif de pressurisation dudit réservoir. Ainsi, la pressurisation du réservoir par le dispositif de pressurisation pourra expulser le fluide de refroidissement du réservoir vers le passage d'évacuation, même lors de l'évacuation des gaz à travers ce passage d'évacuation. Toutefois, des moyens alternatifs, tels que, par exemple, des pompes d'injection, peuvent également être envisagés.

Afin d'exercer une pression directement sur le fluide de refroidissement dans le réservoir, le dispositif de pressurisation peut notamment comprendre un piston dans ledit réservoir. Toutefois, des moyens alternatifs, tels que, par exemple, un diaphragme, peuvent également être utilisés dans le même objet.

Afin d'assurer la pressurisation du réservoir de fluide de refroidissement, le dispositif de pressurisation comprend une charge pyrotechnique auxiliaire en communication avec ledit réservoir. Plus particulièrement, cette charge pyrotechnique auxiliaire peut être installée à l'intérieur même du réservoir. Des moyens de commande de la mise à feu de la charge pyrotechnique principale et de cette charge pyrotechnique auxiliaire peuvent être configurés de manière à ce que la charge pyrotechnique auxiliaire soit mise à feu avant la charge pyrotechnique principale, pour que l'injection de fluide de refroidissement dans le passage d'évacuation commence avant même de l'entrée, dans ce passage d'évacuation, des gaz générés par la mise à feu de la charge pyrotechnique principale. Par ailleurs, la charge pyrotechnique auxiliaire peut être dimensionnée de manière à étaler l'injection du fluide de refroidissement sur une durée plus longue que celle de l'évacuation des gaz générés par la mise à feu de la charge pyrotechnique principale.

Alternativement à cette charge pyrotechnique auxiliaire, toutefois, le dispositif de pressurisation peut comprendre un conduit reliant la charge pyrotechnique principale audit réservoir pour pressuriser le réservoir avec des gaz générés par la mise à feu de la charge pyrotechnique principale. Ainsi, des gaz générés par la mise à feu de la charge pyrotechnique principale peuvent servir aussi à pressuriser le réservoir, simplifiant ainsi le dispositif pyrotechnique.

Toutefois, le dispositif de pressurisation peut aussi comprendre des moyens d'actionnement non-pyrotechniques. Ainsi, quand le dispositif de pressurisation comprend un piston ou un diaphragme pour exercer directement une pression sur le fluide de refroidissement dans le réservoir, le dispositif de pressurisation peut par exemple comprendre un actionneur élastique pour actionner ce piston ou diaphragme après déclenchement du dispositif de pressurisation.

Afin de retenir le fluide de refroidissement avant l'injection, le dispositif d'injection peut comprendre en outre un obturateur interposé entre ledit réservoir et le passage d'évacuation de gaz.

Alternativement ou en complément au dispositif de pressurisation du réservoir, le dispositif d'injection peut comprendre un éjecteur installé dans ledit passage d'évacuation pour assurer, ou au moins assister, l'injection du fluide de refroidissement dans le passage d'évacuation.

Afin de protéger la charge pyrotechnique principale avant sa mise à feu, le dispositif pyrotechnique peut comprendre en outre un obturateur installé dans ledit passage d'évacuation.

Ledit passage d'évacuation peut notamment comprendre un raccord pour sa connexion à une admission de turbine. Ce raccord peut par exemple être libérable, afin de permettre le démontage et remplacement rapide du dispositif pyrotechnique après utilisation.

La présente divulgation concerne également une turbomachine comprenant une turbine et le dispositif pyrotechnique susmentionné, dans laquelle le passage d'évacuation est relié à un passage d'admission de la turbine. Les gaz générés par la mise à feu de la charge pyrotechnique principale peuvent ainsi servir à actionner, au moins initialement, la turbine.

La turbine peut notamment être couplable à une pompe d'alimentation d'un moteur (par exemple, une pompe d'alimentation d'un moteur-fusée en ergol) pour l'actionnement de la pompe d'alimentation et/ou à un arbre rotatif d'un moteur (par exemple, un arbre reliant une turbine à un compresseur dans un moteur à turbine à gaz) pour le démarrage du moteur.

La présente divulgation concerne aussi un procédé de refroidissement de gaz générés par la mise à feu d'une charge pyrotechnique principale d'un dispositif pyrotechnique, dans lequel un fluide de refroidissement est injecté, par un dispositif d'injection, dans un passage d'évacuation dans lequel circulent lesdits gaz.

### Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1A est une représentation schématique d'un dispositif pyrotechnique suivant un premier mode de réalisation ,
- la figure 1B est une représentation schématique du dispositif pyrotechnique de la figure 1A après sa mise à feu ,
- la figure 2 est une représentation de détail d'une variante du dispositif pyrotechnique des figures 1A et 1B ,
- la figure 3A est une représentation schématique d'un dispositif pyrotechnique suivant un deuxième mode de réalisation ,
- la figure 3B est une représentation schématique du dispositif pyrotechnique de la figure 3A après sa mise à feu ,
- la figure 4A est une représentation schématique d'un dispositif pyrotechnique suivant un troisième mode de réalisation ,
- la figure 4B est une représentation schématique du dispositif pyrotechnique de la figure 4A après sa mise à feu ,
- la figure 5A est une représentation schématique d'un dispositif pyrotechnique suivant un quatrième mode de réalisation ,
- la figure 5B est une représentation schématique du dispositif pyrotechnique de la figure 5A après sa mise à feu ,
- la figure 6 illustre schématiquement un moteur à turbine de gaz équipé d'un dispositif pyrotechnique suivant l'un quelconque des premier à quatrième modes de réalisation , et
- la figure 7 illustre schématiquement un moteur-fusée équipé d'un dispositif pyrotechnique suivant l'un quelconque des premier à quatrième modes de réalisation.

### Description détaillée de l'invention

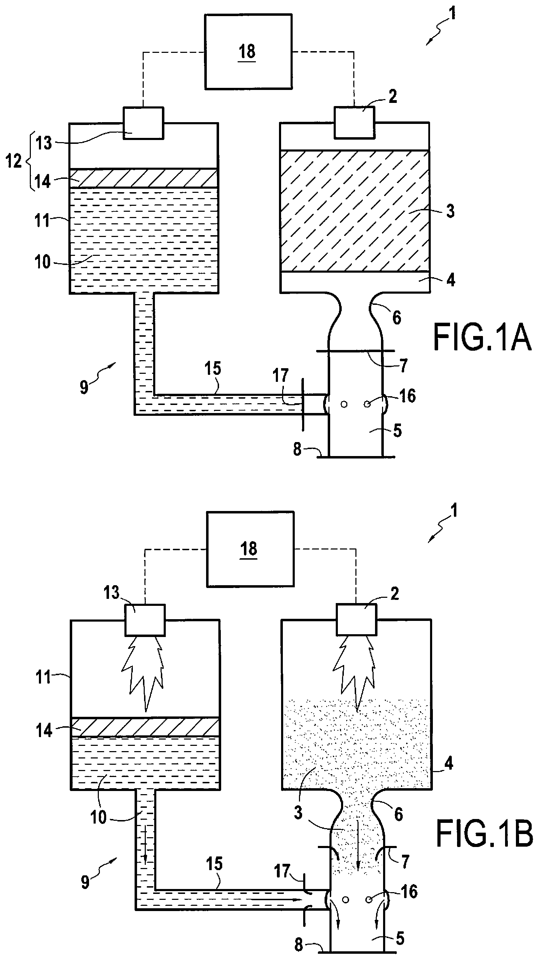

Un dispositif pyrotechnique 1 suivant un premier mode de réalisation est illustré de manière schématique sur la figure 1A. Ce dispositif pyrotechnique 1 comprend une charge pyrotechnique principale 3, avec un dispositif de mise à feu 2, dans une chambre de mise à feu 4, ainsi qu'un passage d'évacuation 5, en communication avec la charge pyrotechnique principale 3 à travers un col sonique 6. Un premier obturateur 7 est installé dans le passage d'évacuation 5 en aval du col sonique 6 et dimensionné de manière à rompre sous la pression des gaz générés par la mise à feu de la charge pyrotechnique principale 3 pour permettre l'évacuation de ces gaz. Alternativement, toutefois, un obturateur à ouverture commandée est également envisageable pour le même objet. Le passage d'évacuation 5 comprend aussi un raccord 8 destiné à la connexion de ce passage d'évacuation 5 à un passage d'admission d'une turbine. Ce raccord 8 peut notamment être libérable de manière à permettre le démontage et remplacement rapide de ce dispositif pyrotechnique 1 après son utilisation.

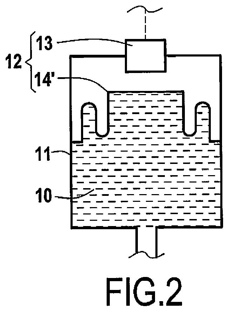

Le dispositif pyrotechnique 1 comprend aussi un dispositif d'injection 9 pour l'injection d'un fluide de refroidissement 10 dans le passage d'évacuation 5. Pour cela, dans ce premier mode de réalisation, le dispositif d'injection 9 comprend un réservoir 11 contenant le fluide de refroidissement 10 et un dispositif de pressurisation 12, composé dans ce mode de réalisation d'une charge pyrotechnique auxiliaire 13 et d'un piston 14 interposé entre la charge pyrotechnique auxiliaire 13 et le fluide de refroidissement 10. Toutefois, dans une variante illustrée sur la figure 2, un diaphragme 14' peut remplacer le piston 14.

Le réservoir 11 est relié à travers un premier conduit 15 à des orifices 16 d'injection du fluide de refroidissement 10 dans le passage d'évacuation de gaz. Un deuxième obturateur 17 installé dans ce premier conduit 15 sépare le fluide de refroidissement 10 des orifices 16. De manière analogue au premier obturateur 7, ce deuxième obturateur 17 est dimensionné de manière à rompre sous la pression du fluide de refroidissement 10 lors de l'activation du dispositif de pressurisation 12. Toutefois, comme pour le premier obturateur 7, un obturateur à ouverture commandée peut aussi être envisagé en alternative.

Le fluide de refroidissement 10 peut notamment être un liquide aqueux incorporant éventuellement un antigel tel que, par exemple, du méthanol, de l'éthylène glycol, du propylène glycol ou du glycérol, pour éviter le gel du fluide de refroidissement 10 dans le réservoir 11 à basses températures.

Dans le mode de réalisation illustré, le dispositif de mise à feu 2 et la charge pyrotechnique auxiliaire 13 sont connectés, par exemple électriquement, à une unité de commande 18 configurée pour déclencher la mise à feu de la charge pyrotechnique auxiliaire 13 et, à travers le dispositif de mise à feu 2, aussi de la charge pyrotechnique principale 3. L'unité de commande 18 peut être configurée pour déclencher la mise à feu de la charge pyrotechnique auxiliaire 13 avant celle de la charge pyrotechnique principale 3 de telle manière que l'injection du fluide de refroidissement 10 dans le passage d'évacuation 5 commence avant l'arrivée des gaz générés par la mise à feu de la charge pyrotechnique principale 3 dans ce passage d'évacuation 5. En outre, la charge pyrotechnique auxiliaire 13 peut être configurée de manière à ce que sa déflagration soit plus prolongée que celle de la charge pyrotechnique principale 3.

Dans le mode de réalisation illustré, la charge pyrotechnique principale 3 et la charge pyrotechnique auxiliaire 13 sont toutes deux des charges pyrotechniques solides, afin de faciliter leur maniement.

En fonctionnement, l'unité de commande 18 déclenche ainsi la mise à feu de la charge pyrotechnique principale 3 de manière à générer des gaz chauds dont la pression va rompre le premier obturateur 7 de manière à déboucher à haute vitesse, après leur passage par le col sonique 6, dans le passage d'évacuation 5. D'autre part, l'unité de commande 18, en déclenchant aussi la mise à feu de la charge pyrotechnique auxiliaire 13, va provoquer la pressurisation du réservoir 11 par le dispositif de pressurisation 12, dont le piston 14, impulsé par les gaz générés par la mise à feu de la charge pyrotechnique auxiliaire 13, va exercer une pression directement sur le fluide de refroidissement 10 pour l'expulser du réservoir 11 à travers le premier conduit 15, en rompant le deuxième obturateur 17, et l'injecter, à travers les orifices 16, dans le passage d'évacuation 5, où le fluide de refroidissement 10 va se mélanger avec les gaz chauds générés par la mise à feu de la charge pyrotechnique principale 3 et circulant à travers ce passage d'évacuation 5, de manière à refroidir ces gaz chauds, comme illustré sur la figure 1B.

En particulier, quand la température de ces gaz chauds est sensiblement supérieure à la température de vaporisation du fluide de refroidissement 10, le changement de phase du fluide de refroidissement va contribuer efficacement au refroidissement des gaz chauds. En outre, ce changement de phase va augmenter très sensiblement le débit volumique de gaz débouchant du passage d'évacuation 5 à travers le raccord, ce qui contribuera à augmenter le travail mécanique pouvant en être extrait par une turbine en aval.

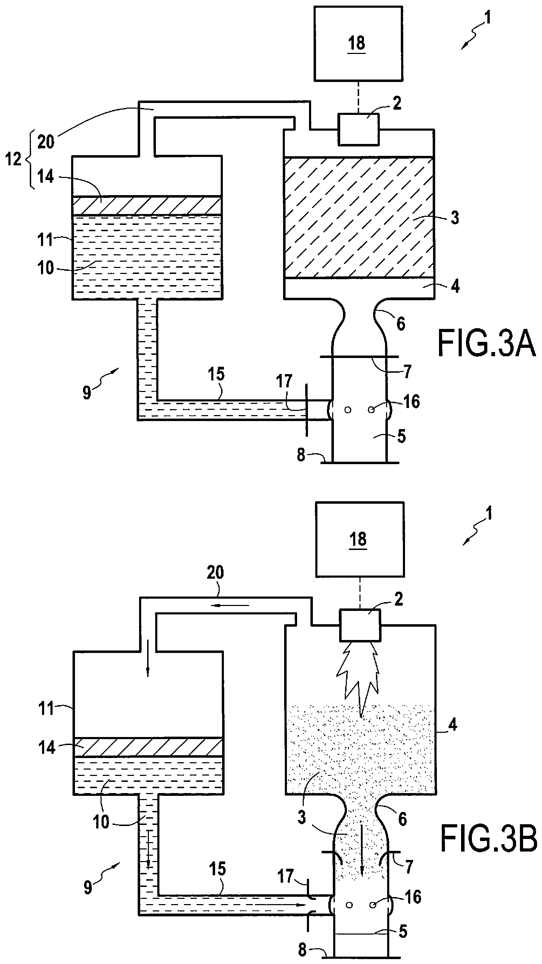

Bien que, dans ce premier mode de réalisation, une charge pyrotechnique auxiliaire 13 soit utilisée pour la pressurisation du réservoir 11, il est alternativement possible d'utiliser plutôt des gaz chauds générés par la mise à feu de la charge pyrotechnique principale. Ainsi, dans un deuxième mode de réalisation, illustré sur la figure 3A, la charge pyrotechnique auxiliaire est remplacée, dans le dispositif de pressurisation 12, par un deuxième conduit 20 mettant en communication la charge pyrotechnique principale 3, dans la chambre de mise à feu 4, avec le réservoir 11. Le dispositif pyrotechnique suivant ce deuxième mode de réalisation étant analogue à celui du premier mode de réalisation dans tous ses autres aspects, les mêmes chiffres de référence que pour la figure 1A sont utilisés dans cette figure 3A pour tous les éléments équivalents. Par ailleurs, comme dans la variante illustrée sur la figure 2, un diaphragme 14' peut remplacer le piston 14 dans ce deuxième mode de réalisation aussi.

En fonctionnement, comme dans le premier mode de réalisation, l'unité de commande 18 déclenche la mise à feu de la charge pyrotechnique principale 3 de manière à générer des gaz chauds dont la pression va rompre le premier obturateur 7 de manière à déboucher à haute vitesse, après leur passage par le col sonique 6, dans le passage d'évacuation 5. En même temps, toutefois, une autre partie des gaz chauds générés par la mise à feu de la charge pyrotechnique principale 3 va circuler, à travers le deuxième conduit 20, vers le réservoir 11 pour actionner le piston 14, qui va ainsi exercer une pression directement sur le fluide de refroidissement 10 pour l'expulser du réservoir 11 à travers le premier conduit 15, en rompant le deuxième obturateur 17, et l'injecter, à travers les orifices 16, dans le passage d'évacuation 5, où le fluide de refroidissement 10 va se mélanger avec les gaz chauds générés par la mise à feu de la charge pyrotechnique principale 3 et circulant à travers ce passage d'évacuation 5, de manière à refroidir ces gaz chauds, comme illustré sur la figure 3B. A cause de la détente partielle, dans le col sonique 6, des gaz générés par la mise à feu de la charge pyrotechnique principale 3, la pression dans le passage d'évacuation 5 sera en effet inférieure à celle régnant dans la chambre de mise à feu 4 et transmise au réservoir à travers le deuxième conduit 20.

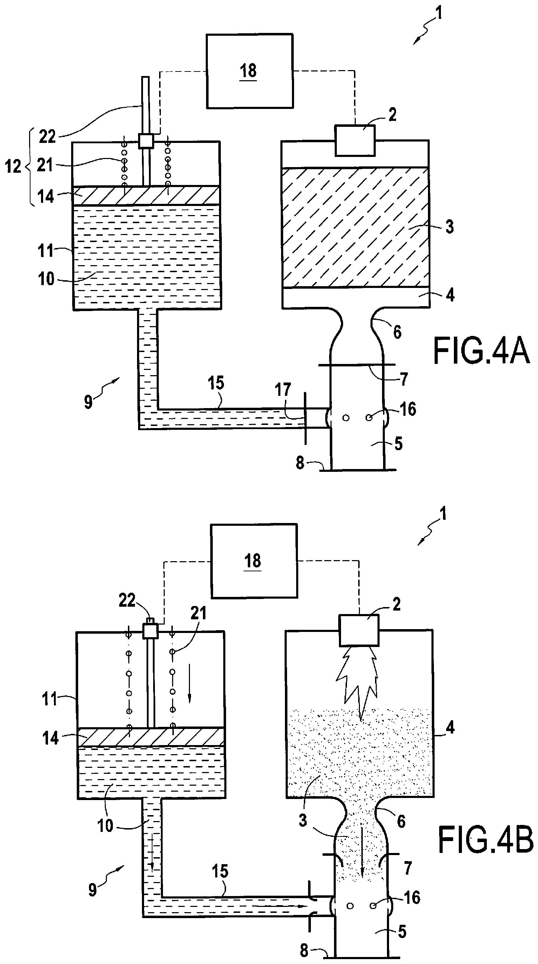

Bien que, dans ces deux premiers modes de réalisation, la pressurisation soit obtenue grâce aux gaz générés par la mise à feu d'une charge pyrotechnique, il est également envisageable d'utiliser des moyens non-pyrotechniques dans le dispositif de pressurisation. Ainsi, dans un troisième mode de réalisation, illustré sur la figure 4A, la charge pyrotechnique auxiliaire du premier mode de réalisation est remplacée, dans le dispositif de pressurisation 12, par un actionneur élastique 21, essentiellement un ressort précontraint, et un mécanisme 22 de rétention du piston 14, connecté à l'unité de commande 18 et configuré pour libérer le piston 14 suite à un signal de déclenchement de la pressurisation transmis par cette unité de commande 18. Le dispositif pyrotechnique suivant ce troisième mode de réalisation étant analogue à celui du premier mode de réalisation dans tous ses autres aspects, les mêmes chiffres de référence que pour la figure 1A sont utilisés dans cette figure 4A pour tous les éléments équivalents. Par ailleurs, comme dans la variante illustrée sur la figure 2, un diaphragme 14' peut remplacer le piston 14 dans ce troisième mode de réalisation aussi. Dans ce cas, il serait même envisageable que le diaphragme 14', configuré élastique, soit précontraint pour remplir aussi la fonction d'actionneur élastique.

En fonctionnement, comme dans le premier mode de réalisation, l'unité de commande 18 déclenche la mise à feu de la charge pyrotechnique principale 3 de manière à générer des gaz chauds dont la pression va rompre le premier obturateur 7 de manière à déboucher à haute vitesse, après leur passage par le col sonique 6, dans le passage d'évacuation 5. D'autre part, toutefois, l'unité de commande 18, en déclenchant aussi la libération du piston 14 par le mécanisme de rétention 22, va provoquer la pressurisation du réservoir 11 par le dispositif de pressurisation 12, dont le piston 14, impulsé par l'actionneur élastique 21, va exercer une pression directement sur le fluide de refroidissement 10 pour l'expulser du réservoir 11 à travers le premier conduit 15, en rompant le deuxième obturateur 17, et l'injecter, à travers les orifices 16, dans le passage d'évacuation 5, où le fluide de refroidissement 10 va se mélanger avec les gaz chauds générés par la mise à feu de la charge pyrotechnique principale 3 et circulant à travers ce passage d'évacuation 5, de manière à refroidir ces gaz chauds, comme illustré sur la figure 4B.

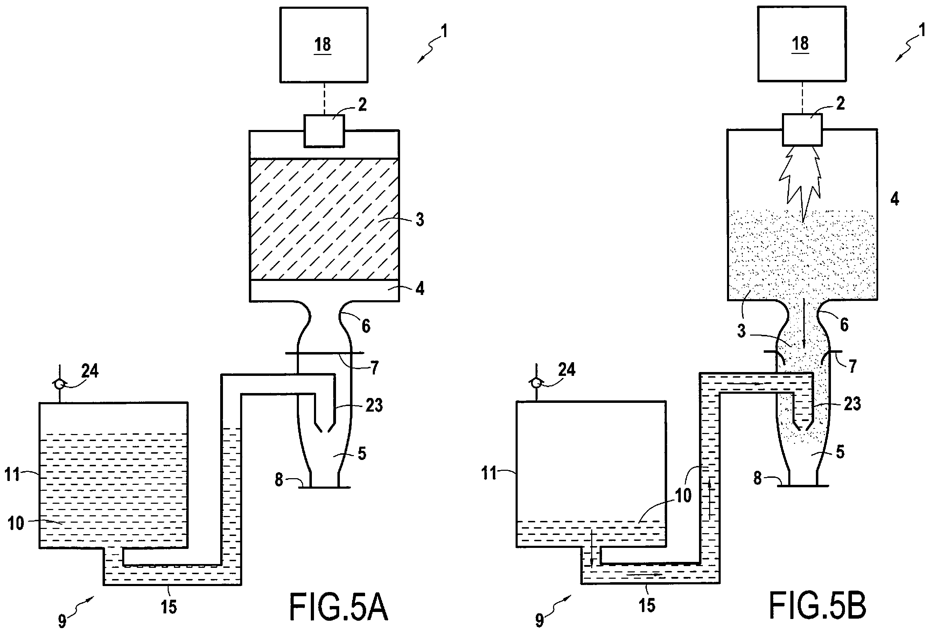

Bien que, dans ces trois premiers modes de réalisation, l'injection de fluide refroidissant soit provoquée par pressurisation du réservoir de fluide de refroidissement, il est également envisageable d'assurer cette injection sans faire appel à des moyens de pressurisation. Ainsi, par exemple, un éjecteur utilise la dépression provoquée par la circulation d'un premier fluide dans un passage dûment formé pour aspirer un deuxième fluide dans le flux du premier fluide. Ainsi, dans un quatrième mode de réalisation, illustré sur la figure 5A, le dispositif d'injection 9 incorpore un éjecteur 23 dans le passage d'évacuation 5, cet éjecteur étant connecté au réservoir 11 à travers le premier conduit 15, remplaçant ainsi le dispositif de pressurisation 12 et les orifices 16. Par ailleurs, dans le mode de réalisation illustré, aucun obturateur n'est installé dans le premier conduit 15 ou dans l'éjecteur 23, puisque ceux-ci sont configurés de manière à empêcher la circulation du fluide de refroidissement 10 sauf sous l'action de la dépression provoquée autour de l'éjecteur 23 par la circulation de gaz générés par la mise à feu de la charge pyrotechnique principale 3. D'autre part, pour maintenir la pression à l'intérieur du réservoir 11 pendant l'aspiration du fluide de refroidissement 10 à travers le conduit 15 et l'éjecteur 23, le réservoir 11 peut présenter un clapet anti-retour 24 permettant l'entrée d'air pour remplacer le volume de fluide de refroidissement extrait du réservoir 11. Alternativement, le réservoir 11 pourrait être un réservoir souple. Le dispositif pyrotechnique suivant ce quatrième mode de réalisation étant analogue à celui du premier mode de réalisation dans tous ses autres aspects, les mêmes chiffres de référence que pour la figure 1A sont utilisés dans cette figure 5A pour tous les éléments équivalents.

En fonctionnement, comme dans tous les modes de réalisation précédents, l'unité de commande 18 déclenche la mise à feu de la charge pyrotechnique principale 3 de manière à générer des gaz chauds dont la pression va rompre le premier obturateur 7 de manière à déboucher à haute vitesse, après leur passage par le col sonique 6, dans le passage d'évacuation 5. La circulation à haute vitesse de ces gaz chauds dans le passage d'évacuation 5 va générer, autour de l'éjecteur 23, une dépression aspirant le fluide de refroidissement 10 du réservoir 11, à travers le premier conduit 15 et l'éjecteur 23, vers le passage d'évacuation 5, injectant ainsi ce fluide de refroidissement 10 dans le passage d'évacuation 5, où le fluide de refroidissement 10 va se mélanger avec les gaz chauds générés par la mise à feu de la charge pyrotechnique principale 3 et circulant à travers ce passage d'évacuation 5, de manière à refroidir ces gaz chauds, comme illustré sur la figure 5B.

Dans chacun des cas, les gaz générés par la mise à feu de la charge pyrotechnique principale 3 et refroidis par l'injection de fluide de refroidissement, peuvent être utilisés pour la génération d'un travail mécanique, avec une puissance élevée, pendant une brève période de temps. Ce travail mécanique peut notamment être extrait de ces gaz par une turbine, et peut notamment servir au démarrage d'un moteur.

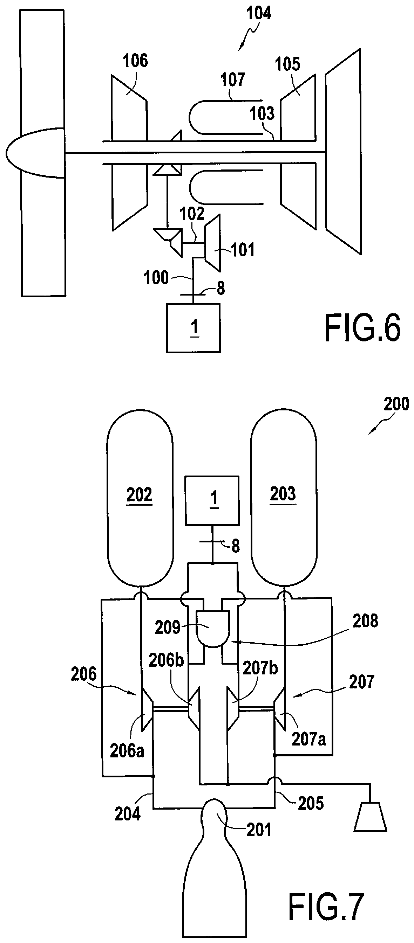

Ainsi, dans un exemple illustré sur la figure 6, le dispositif pyrotechnique 1, qui peut être un dispositif pyrotechnique suivant l'un quelconque des modes de réalisation décrits ci-dessus, est raccordé, à travers le raccord 8, au passage d'admission 100 d'une première turbine 101, plus spécifiquement une turbine supersonique, dont l'arbre de sortie 102 est couplé en rotation à un arbre rotatif 103 d'un moteur 104, plus spécifiquement un turboréacteur à double flux tel qu'utilisé pour la propulsion aérienne, avec un compresseur 106, une chambre de combustion 107, et une deuxième turbine 105 reliée au compresseur 106 par l'arbre rotatif 103 pour son actionnement.

En fonctionnement, les gaz générés par la mise à feu de la charge pyrotechnique principale 3 du dispositif pyrotechnique 1 et refroidis par l'injection du fluide de refroidissement 10 arrivent, à travers le raccord 8 et le passage d'admission 100, à la première turbine 101, où leur détente va générer du travail mécanique transmis à l'arbre rotatif 103 à travers l'arbre de sortie 102, de manière à actionner le compresseur 106, pour fournir de l'air sous pression à la chambre de combustion 107 afin de permettre son allumage. Ainsi, le dispositif pyrotechnique 1 et la première turbine 101 forment ensemble un démarreur permettant une mise en fonctionnement rapide du moteur 104. Il faut noter que, bien que dans cet exemple cette application soit illustrée spécifiquement avec un turboréacteur à double flux, elle est également adaptée à d'autres types de moteurs à turbine de gaz, et même à d'autres types de moteurs thermiques, notamment à pistons.

Par ailleurs, un dispositif pyrotechnique 1 suivant l'un quelconque des modes de réalisation décrits ci-dessus peut aussi avoir d'autres applications, et notamment celle d'assurer le démarrage d'une turbopompe d'alimentation en ergol. Ainsi, dans un exemple illustré sur la figure 7, un moteur-fusée 200 comprend une chambre propulsive 201, deux réservoirs d'ergols 202,203, et deux circuits d'alimentation 204, 205 reliant chacun un réservoir d'ergol respectif 202, 203 à la chambre propulsive 201 pour son alimentation en ergols. Chaque circuit d'alimentation 204, 205 comprend une turbopompe respective 206, 207, et chaque turbopompe 206, 207 comprend une pompe 206a, 207a, et une turbine 206b, 207b pour l'actionnement de la pompe respective 206a, 207a. Le moteur-fusée 200 comprend aussi un générateur de gaz 208, avec une chambre de combustion 209 reliée à des dérivations des deux circuits d'alimentation pour son alimentation en ergols, et deux conduits de sortie 210,211, reliés chacun à l'admission d'une turbine 206b, 207b respective de manière à ce que des gaz issus de la combustion des ergols dans la chambre de combustion 209 du générateur de gaz 208 actionnent ces turbines 206b, 207b.

Toutefois, pour permettre le démarrage des turbopompes 206, 207 avant l'arrivée d'ergols à la chambre de combustion 209 du générateur de gaz 208, le moteur-fusée 200 comprend aussi un dispositif pyrotechnique 1 suivant l'un quelconque des modes de réalisation décrits ci-dessus, raccordé, à travers le raccord 8, aux admissions des deux turbines 206b, 207b.

Ainsi, en fonctionnement, les gaz générés par la mise à feu de la charge pyrotechnique principale 3 du dispositif pyrotechnique 1 et refroidis par l'injection du fluide de refroidissement 10 arrivent, à travers le raccord 8, aux admissions des turbines 206b, 207b, où leur détente commence à actionner les turbopompes 206, 207 pour fournir des ergols à la chambre de combustion 209 du générateur de gaz 208. Après allumage de cette chambre de combustion 209, les gaz générés par la combustion des ergols dans cette chambre de combustion 209 pourront prendre le relais des gaz provenant du dispositif pyrotechnique 1 pour continuer à actionner les turbines 206b, 207b et ainsi maintenir la circulation des ergols et le fonctionnement du moteur-fusée 200. Il faut noter que, bien que dans cet exemple cette application soit illustrée spécifiquement avec un moteur-fusée à flux dérivé, elle est également envisageable pour d'autres types de moteurs-fusées à alimentation par turbopompe, comme par exemple, les moteurs-fusées à flux intégré, à expandeur ou à combustion étagée.

Par ailleurs, quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. En particulier, l'éjecteur du quatrième mode de réalisation peut aussi être combiné avec l'un quelconque des dispositifs de pressurisation des trois premiers modes de réalisation, afin de combiner leurs avantages. Par conséquent, la description et les dessins doivent être considérés dans un sens illustratif plutôt que restrictif.

## Revendications

1. Dispositif pyrotechnique (1) comprenant une charge pyrotechnique principale (3), un dispositif de mise à feu (2) pour la mise à feu de la charge pyrotechnique principale (3), un passage d'évacuation (5) pour évacuer des gaz générés par la mise à feu de la charge pyrotechnique principale (3), **caractérisé en ce qu'**il comprend un dispositif d'injection (9) configuré pour injecter un fluide de refroidissement (10) dans ledit passage (5) d'évacuation de gaz.

2. Dispositif pyrotechnique (1) suivant la revendication 1, dans lequel ledit fluide de refroidissement (10) est aqueux.

3. Dispositif pyrotechnique (1) suivant la revendication 2, dans lequel ledit fluide de refroidissement (10) contient aussi un antigel.

4. Dispositif pyrotechnique (1) suivant l'une quelconque des revendications précédentes, dans lequel le dispositif d'injection (9) comprend un réservoir (11) pour le fluide de refroidissement (10), en communication avec le passage d'évacuation (5), et un dispositif de pressurisation (12) dudit réservoir (11).

5. Dispositif pyrotechnique (1) suivant la revendication 4, dans lequel le dispositif de pressurisation (12) comprend un piston (14) dans ledit réservoir (11).

6. Dispositif pyrotechnique (1) suivant l'une quelconque des revendications 4 ou 5, dans lequel le dispositif de pressurisation (12) comprend une charge pyrotechnique auxiliaire (13) en communication avec ledit réservoir (11).

7. Dispositif pyrotechnique (1) suivant l'une quelconque des revendications 4 ou 5, dans lequel le dispositif de pressurisation (12) comprend un conduit (20) reliant la charge pyrotechnique principale (3) audit réservoir (11) pour pressuriser le réservoir (11) avec des gaz générés par la mise à feu de la charge pyrotechnique principale (3).

8. Dispositif pyrotechnique (1) suivant l'une quelconque des revendications 4 à 7, dans lequel le dispositif d'injection (9) comprend en outre un obturateur (17) interposé entre ledit réservoir (11) et le passage d'évacuation (5).

9. Dispositif pyrotechnique (1) suivant l'une quelconque des revendications précédentes, dans lequel le dispositif d'injection (9) comprend un éjecteur (23) installé dans ledit passage d'évacuation (5).

10. Dispositif pyrotechnique (1) suivant l'une quelconque des revendications précédentes, comprenant en outre un obturateur (7) installé dans ledit passage d'évacuation (5).

11. Turbomachine comprenant une turbine et un dispositif pyrotechnique suivant l'une quelconque des revendications précédentes, dans laquelle le passage d'évacuation de gaz est relié à un passage d'admission de la turbine.

12. Procédé de refroidissement de gaz générés par la mise à feu d'une charge pyrotechnique principale (3) d'un dispositif pyrotechnique (1), dans lequel un fluide de refroidissement (10) est injecté, par un dispositif d'injection (9), dans un passage d'évacuation (5) dans lequel circulent lesdits gaz.

## Patentansprüche

1. Pyrotechnische Vorrichtung (1), umfassend eine pyrotechnische Hauptladung (3), eine Zündvorrichtung (2) zum Zünden der pyrotechnischen Hauptladung (3), einen Auslasskanal (5) zum Auslassen der durch das Zünden der pyrotechnischen Hauptladung (3) erzeugten Gase, **dadurch gekennzeichnet, dass** sie eine Einspritzvorrichtung(9) umfasst, die ausgelegt ist, um ein Kühlfluid (10) in den Gasauslasskanal (5) einzuspritzen.

2. Pyrotechnische Vorrichtung (1) nach Anspruch 1, wobei das Kühlfluid (10) wässrig ist.

3. Pyrotechnische Vorrichtung (1) nach Anspruch 2, wobei das Kühlfluid (10) auch ein Frostschutzmittel enthält.

4. Pyrotechnische Vorrichtung (1) nach einem der vorangehenden Ansprüche, wobei die Einspritzvorrichtung (9) einen Vorratsbehälter (11) für das Kühlfluid (10) in Kommunikation mit dem Auslasskanal (5) und eine Druckbeaufschlagungsvorrichtung (12) des Vorratsbehälters (11) umfasst.

5. Pyrotechnische Vorrichtung (1) nach Anspruch 4, wobei die Druckbeaufschlagungsvorrichtung (12) einen Kolben (14) im Vorratsbehälter (11) umfasst.

6. Pyrotechnische Vorrichtung (1) nach einem der Ansprüche 4 oder 5, wobei die Druckbeaufschlagungsvorrichtung (12) eine pyrotechnische Hilfsladung (13) in Kommunikation mit dem Vorratsbehälter (11) umfasst.

7. Pyrotechnische Vorrichtung (1) nach einem der Ansprüche 4 oder 5, wobei die Druckbeaufschlagungsvorrichtung (12) eine Leitung (20) umfasst, die die pyrotechnische Hauptladung (3) mit dem Vorratsbehälter (11) verbindet, um den Vorratsbehälter (11) mit Gasen mit Druck zu beaufschlagen, die durch das Zünden der pyrotechnischen Hauptladung (3) erzeugt werden.

8. Pyrotechnische Vorrichtung (1) nach einem der Ansprüche 4 bis 7, wobei die Einspritzvorrichtung (9) ferner einen Verschluss (17) zwischen dem Vorratsbehälter (11) und dem Auslasskanal (5) umfasst.

9. Pyrotechnische Vorrichtung (1) nach einem der vorangehenden Ansprüche, wobei die Einspritzvorrichtung (9) einen Ejektor (23) umfasst, der im Auslasskanal (5) installiert ist.

10. Pyrotechnische Vorrichtung (1) nach einem der vorangehenden Ansprüche, umfassend ferner einen Verschluss (7), der im Auslasskanal (5) installiert ist.

11. Turbomaschine, umfassend eine Turbine und eine pyrotechnische Vorrichtung nach einem der vorangehenden Ansprüche, wobei der Gasableitungsdurchgang mit einem Einlasskanal der Turbine verbunden ist.

12. Verfahren zum Kühlen von Gasen, die durch das Zünden einer pyrotechnischen Hauptladung (3) einer pyrotechnischen Vorrichtung (1) erzeugt werden, wobei ein Kühlfluid (10) durch eine Einspritzvorrichtung (9) in den Auslasskanal (5) eingeleitet wird, in dem die Gase zirkulieren.

## Claims

1. A pyrotechnic device (1) comprising a main pyrotechnic charge (3), a firing device (2) for firing the main pyrotechnic charge (3), a discharge passage (5) for discharging the gas generated by firing the main pyrotechnic charge (3), **characterised in that** it comprises an injector device (9) configured to inject a cooling fluid (10) into said gas discharge passage (5).

2. A pyrotechnic device (1) according to claim 1, wherein said cooling fluid (10) is aqueous.

3. A pyrotechnic device (1) according to claim 2, wherein said cooling fluid (10) also contains an antifreeze.

4. A pyrotechnic device (1) according to any preceding claim, wherein the injector device (9) comprises a tank (11) for the cooling fluid (10), the tank being in communication with the discharge passage (5), and a pressurizing device (12) for pressurizing said tank (11).

5. A pyrotechnic device (1) according to claim 4, wherein the pressurizing device (12) comprises a piston (14) in said tank (11).

6. A pyrotechnic device (1) according to claim 4 or claim 5, wherein the pressurizing device (12) comprises an auxiliary pyrotechnic charge (13) in communication with said tank (11).

7. A pyrotechnic device (1) according to claim 4 or claim 5, wherein the pressurizing device (12) comprises a duct (20) connecting the main pyrotechnic charge (3) to said tank (11) in order to pressurize the tank (11) with the gas generated by firing the main pyrotechnic charge (3).

8. A pyrotechnic device (1) according to any one of claims 4 to 7, wherein the injector device (9) further includes a shutter (17) interposed between said tank (11) and the discharge passage (5).

9. A pyrotechnic device (1) according to any preceding claim, wherein the injector device (9) comprises an ejector (23) installed in said discharge passage (5).

10. A pyrotechnic device (1) according to any preceding claim, further comprising a plug (7) installed in said discharge passage (5).

11. A turbomachine including a turbine and a pyrotechnic device according to any preceding claim, wherein the gas discharge passage is connected to an inlet passage of the turbine.

12. A method of cooling gas generated by firing a main pyrotechnic charge (3) of a pyrotechnic device (1), wherein the cooling fluid (10) is injected by an injector device (9) into a discharge passage (5) in which said gas flows.
